# EUROPEAN PATENT SPECIFICATION

(11) **EP 3 744 569 B1**
(45) Date of publication and mention of the grant of the patent: **10.08.2022**
(21) Application number: 19740893.3
(22) Date of filing: 18.01.2019
(51) Int. Cl.: H04N 5/232, B60R 11/04, B02B 7/00, G02B 7/00, H04N 5/225, B60R 1/00, H04N 7/18, B60R 11/00

(54) **ELECTRONIC MIRROR IMAGING DEVICE, ELECTRONIC MIRROR SYSTEM, AND AUTOMOBILE**
BILDGEBUNGSVORRICHTUNG EINES ELEKTRONISCHEN SPIEGELS, ELEKTRONISCHES SPIEGELSYSTEM UND KRAFTFAHRZEUG
DISPOSITIF D'IMAGERIE À MIROIR ÉLECTRONIQUE, SYSTÈME DE MIROIR ÉLECTRONIQUE, ET AUTOMOBILE

(30) Priority: 22.01.2018 JP 2018008017
(43) Date of publication of application: 02.12.2020
(73) Proprietor: KOITO MANUFACTURING CO., LTD., Minato-ku Tokyo 108-8711 (JP)
(72) Inventor: WAMA, Takenori, Shizuoka-shi Shizuoka 424-8764 (JP)
(74) Representative: Algemeen Octrooi- en Merkenbureau B.V.
(86) International application number: PCT/JP2019/001404
(87) International publication number: WO 2019/142892

(56) References cited:
- EP-A1- 2 963 922
- WO-A1-2016/152682
- JP-A- 2008 199 145
- JP-A- 2013 179 397
- JP-A- 2015 060 696
- US-A1- 2006 072 011

## Description

### [TECHNICAL FIELD]

The present invention relates to an electronic mirror according to the preamble of claim 1.

### [BACKGROUND ART]

Instead of conventional door mirrors, fender mirrors, and side mirrors, an electronic mirror system appears to be coming into widespread use. Such an electronic mirror system (which is also referred to as a "mirrorless system") is configured including a camera that captures an image behind a vehicle and a display apparatus that displays an image captured by the camera. In addition to simply displaying an image as with conventional mirrors, such an electronic mirror system is capable of supporting a function of displaying an edited image so as to attract the driver's attention, a function of combining multiple images so as to provide improved visibility, etc. Furthermore, there is no need to install physical components such as door mirrors or side mirrors. Thus, it is anticipated that such an electronic mirror system provides advantages of an improved degree of vehicle design freedom, and of reduced air resistance, etc.

### [Related Art Documents]

### [Patent Documents]

[Patent document 1]
   Japanese Patent Application Laid Open No. 2015-60696
[Patent document 2]
   Japanese Patent Application Laid Open No. 2011-213186

US 20060072011A1 discloses a camera taking an image in a wide range of a visual field cuts out an image of a vehicle's rear part of the image picked up by the camera. The camera rotates or inverts the image and adjusts the image in the direction corresponding to a mirror image of a door mirror. The rearward image that can be sensitively, easily and visually recognized by a driver can be provided.

JP 2015 060696A provide a vehicular lighting fixture that allows installation of a camera as an imaging means for an electronic side mirror without impairing the outer design of a vehicle.

EP 2 963 922A1 discloses a vehicle control apparatus of the embodiment includes an acquisition portion acquiring captured image data output from an imaging portion that is provided at a vehicle and that images a surrounding of the vehicle

### [DISCLOSURE OF THE INVENTION]

### [PROBLEM TO BE SOLVED BY THE INVENTION]

In order to support the popularization of such an electronic mirror system, it is indispensable to provide such a system with a low cost.

The present invention has been made in order to solve such a problem. Accordingly, it is an exemplary purpose of an embodiment of the present invention to provide an image acquisition apparatus that allows an electronic mirror system to be provided with a low cost.

### [MEANS TO SOLVE THE PROBLEM]

The present invention relates to an image acquisition apparatus employed in an electronic mirror system as outlined in accordance with the characterizing part of claim 1. The image acquisition apparatus comprises: a housing having an external appearance that is vertically symmetrical when the image acquisition apparatus is mounted on a vehicle body; and a camera unit mounted within the housing with an orientation so as to provide an output image obtained by rotating an actual image by 90 degrees.

Another embodiment of the present invention also relates to an image acquisition apparatus employed in an electronic mirror system as outlined in claim 5. The image acquisition apparatus comprises: a housing; and a camera unit built into the housing. The housing is structured to have a first side face and a second side face, and to provide the same external appearance when the first side face is mounted on a right-side face of a vehicle and when the second side face is mounted on a left-side face of the vehicle.

### [ADVANTAGE OF THE PRESENT INVENTION]

With an embodiment of the present invention, two image acquisition apparatuses to be mounted on the left side and the right side of the vehicle can be configured as a common component. This allows a manufacturing cost and a management cost to be reduced.

### [BRIEF DESCRIPTION OF THE DRAWINGS]

Fig. 1 is a diagram showing a vehicle including an electronic mirror system;
Fig. 2 is a diagram showing an image acquisition apparatus according to a first embodiment;
Fig. 3 is a three-view drawing of the image acquisition apparatus;
Figs. 4A and 4B are perspective views each showing a vehicle including the image acquisition apparatus shown in Fig. 2 as a built-in component;
Fig. 5 is a diagram for explaining image processing by the electronic mirror system including the image acquisition apparatuses shown in Fig. 2;
Figs. 6A and 6B are a front-view and a perspective view of an image acquisition apparatus according to a second embodiment;
Fig. 7 is a projection view of the image acquisition apparatus;
Figs. 8A and 8B are diagrams for explaining an example of wiring of the image acquisition apparatus and the mounting thereof on the vehicle main body;
Figs. 9A and 9B are perspective views each showing a vehicle including the image acquisition apparatus shown in Fig. 6 as a built-in component; and
Fig. 10 is a diagram for explaining image processing by an electronic mirror system including the image acquisition apparatuses shown in Fig. 6.

### [BEST MODE FOR CARRYING OUT THE INVENTION]

### OVERVIEW OF THE EMBODIMENTS

A first embodiment disclosed in the present specification relates to an image acquisition apparatus. The image acquisition apparatus includes: a housing having an external appearance that is vertically symmetrical when the image acquisition apparatus is mounted on a vehicle body; and a camera unit mounted within the housing with an orientation so as to provide an output image obtained by rotating an actual image by 90 degrees.

Also, the image acquisition apparatus may further include a light source built into the housing, so as to provide a function as a side marker.

An electronic mirror system includes: a right-side camera and a left-side camera respectively provided to the right-side face and the left-side face of a vehicle; a processing unit structured to process output images of the left-side camera and the right-side camera; and a display structured to output an image processed by the processing unit. The right-side camera and the left-side camera are each structured as the above-described image acquisition apparatus structured as a common component.

Also, the processing unit may horizontally invert the respective output images of the right-side camera and the left-side camera, and may rotate the output images thereof by 90 degrees in opposite rotational directions.

A second embodiment disclosed in the present specification also relates to an image acquisition apparatus. The image acquisition apparatus includes a housing and a camera unit built into the housing. The housing is structured to have a first side face and a second side face, and to provide the same external appearance when the first side face is mounted on the right-side face of a vehicle and when the second side face is mounted on the left-side face of the vehicle.

An electronic mirror system includes: a right-side camera and a left-side camera respectively provided to the right-side face and the left-side face of a vehicle; a processing unit structured to process output images of the left-side camera and the right-side camera; and a display structured to output an image processed by the processing unit. The right-side camera and the left-side camera are each structured as the above-described image acquisition apparatus structured as a common component.

Also, the processing unit may horizontally invert the respective output images of the right-side camera and the left-side camera.

Description will be made below regarding the present invention based on preferred embodiments with reference to the drawings. The same or similar components, members, and processes are denoted by the same reference numerals, and redundant description thereof will be omitted as appropriate. The embodiments have been described for exemplary purposes only, and are by no means intended to restrict the present invention. Also, it is not necessarily essential for the present invention that all the features or a combination thereof be provided as described in the embodiments.

### FIRST EMBODIMENT

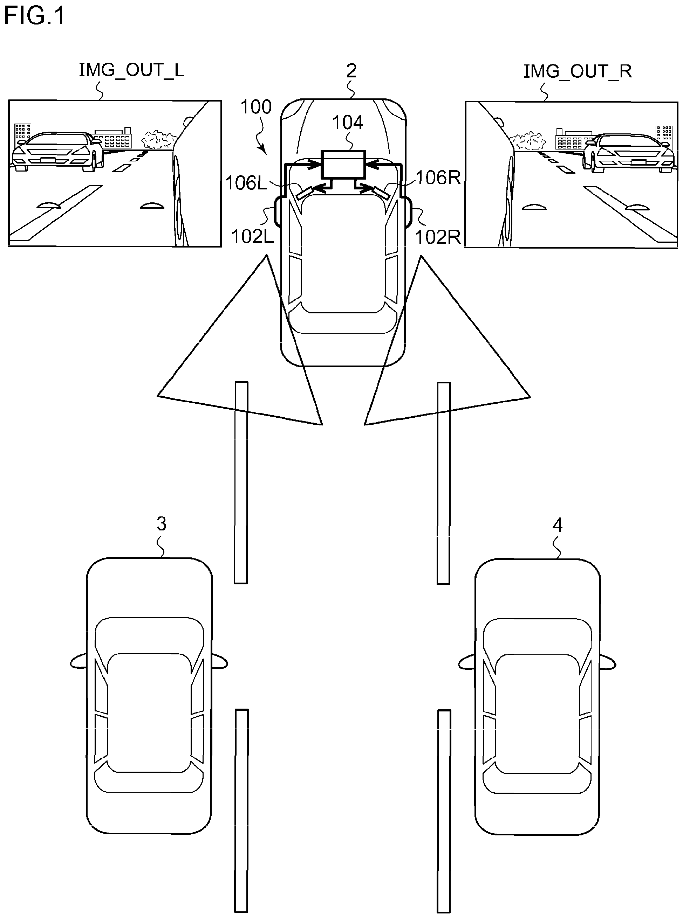

Fig. 1 is a diagram showing a vehicle 2 including an electronic mirror system 100. Reference numerals 3 and 4 each denote a following vehicle. The electronic mirror system 100 includes a left-side camera 102L and a right-side camera 102R installed on the left side and the right side of the vehicle 2, an image processing unit 104, and displays 106. The image processing unit 104 processes output images IMG_IN_L and IMG_IN_R of the cameras 102L and 102R, and displays processed images IMG_OUT_L and IMG_OUT_R on the displays 106L and 106R. In this example, the displays 106L and 106R are provided as dedicated displays for the left side and the right side, respectively. Also, the two images may be displayed on a single display.

In a case in which the left-side camera 102L and the right-side camera 102R are each configured as a common component having the same part number, this allows the cost of the electronic mirror system 100 to be reduced. Accordingly, this allows the cost of the vehicle 2 to be reduced. Description will be made below regarding an image acquisition apparatus that can be employed as the left-side camera 102L and the right-side camera 102R.

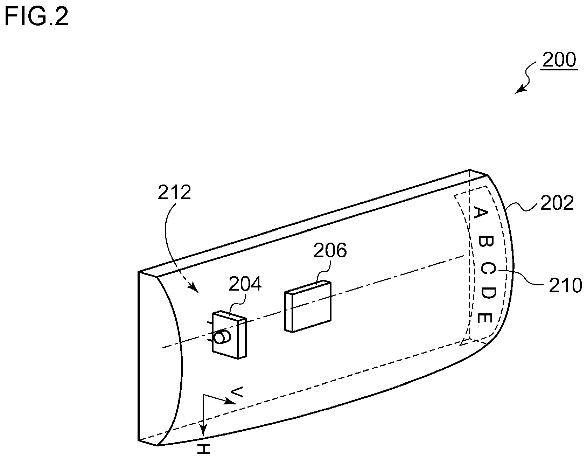

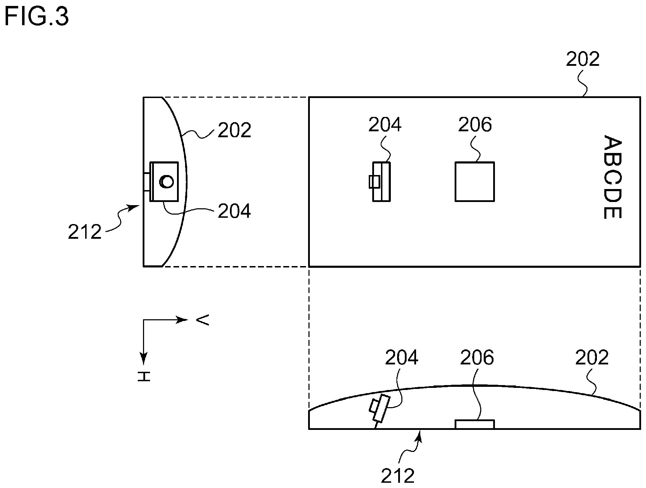

Fig. 2 is a diagram showing an image acquisition apparatus 200 according to a first embodiment. Fig. 3 is a three-view drawing of the image acquisition apparatus 200. The image acquisition apparatus 200 includes a housing 202 and a camera unit 204. The housing 202 has a vertically symmetrical external appearance when it is mounted on a side of the vehicle. Fig. 2 is a diagram showing a state in which the image acquisition apparatus 200 is mounted on the right-side face of the vehicle as viewed from the right side. It should be noted that it is sufficient for the "external appearance symmetry" to satisfy a state in which the symmetry is maintained from the design viewpoint. That is to say, the external appearance symmetry is not required to have a fine degree of symmetry such as symmetry with respect to characters or the like. For example, although a logo 210 as shown in Fig. 2 degrades the symmetry, it can be understood that the image acquisition apparatus 200 shown in Fig. 2 is vertically symmetrical. In a state in which the image acquisition apparatus 200 is mounted on the vehicle body, a mounting face 212 cannot be seen from the outside. Thus, the mounting face 212 has no effect on the symmetry. The shape of the housing 202 is shown for exemplary purposes only. Also, the housing 202 may have a more complicated structure or a simpler structure.

The camera unit 204 includes an image sensor, a lens, and the like. The camera unit 204 is mounted inside the housing 202 with an orientation such that it can acquire an output image obtained by rotating an actual image by 90 degrees. In the drawing, the vertical direction of the output image is indicated by "V", and the horizontal direction thereof is indicated by "H".

In the present embodiment, the image acquisition apparatus 200 includes a light source 206 as a built-in component, and also has a function as a side marker. In this case, the housing 202 is configured such that at least a part of the housing 202 allows output light of the light source 206 to pass through.

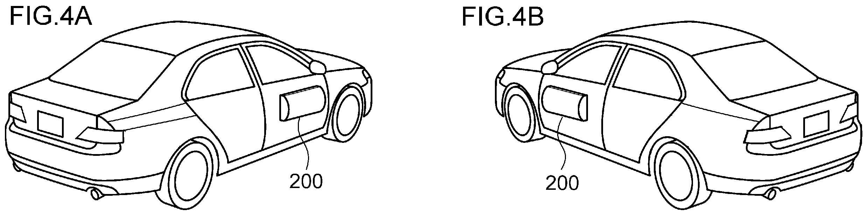

Figs. 4A and 4B are perspective views each showing a vehicle including the image acquisition apparatus 200 shown in Fig. 2 as a built-in component. Fig. 4A is a right-side view, and Fig. 4B is a left-side view.

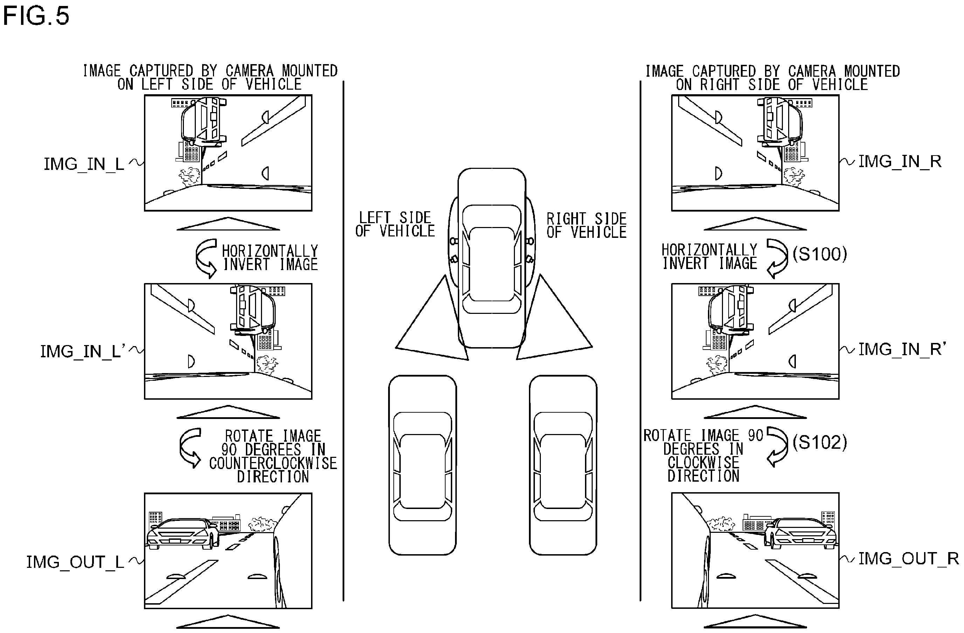

Fig. 5 is a diagram for explaining image processing by the electronic mirror system 100 including the image acquisition apparatus 200 shown in Fig. 2. Here, "IMG_IN_R" and "IMG_IN_L" indicate an output image of the right-side camera and an output image of the left-side camera, respectively. The image processing unit 104 horizontally inverts the output image IMG_IN_R of the right-side camera and the output image IMG_IN_L of the left-side camera (S100). Here, the "horizontal direction" represents the horizontal direction of the image data. Furthermore, the image processing unit 104 rotates the horizontally inverted images IMG_IN_R' and IMG_IN_L' by 90 degrees in opposite rotational directions (S102). The final images IMG_OUT_R and IMG_OUT_L thus obtained are displayed on the displays.

The above is the electronic mirror system 100 according to the first embodiment. With the electronic mirror system 100, the left-side and right-side image acquisition apparatuses 200 can each be configured as a common component. This allows a manufacturing cost to be reduced. In addition, this allows a management cost to be reduced.

### SECOND EMBODIMENT

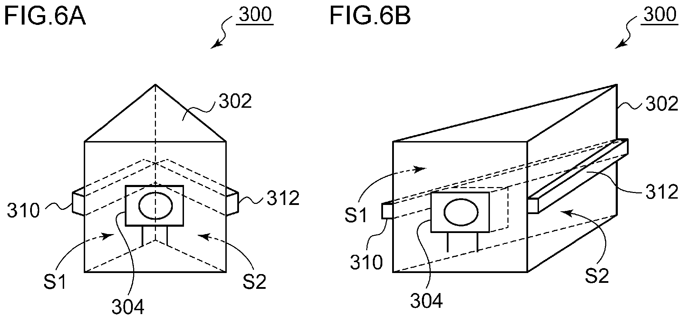

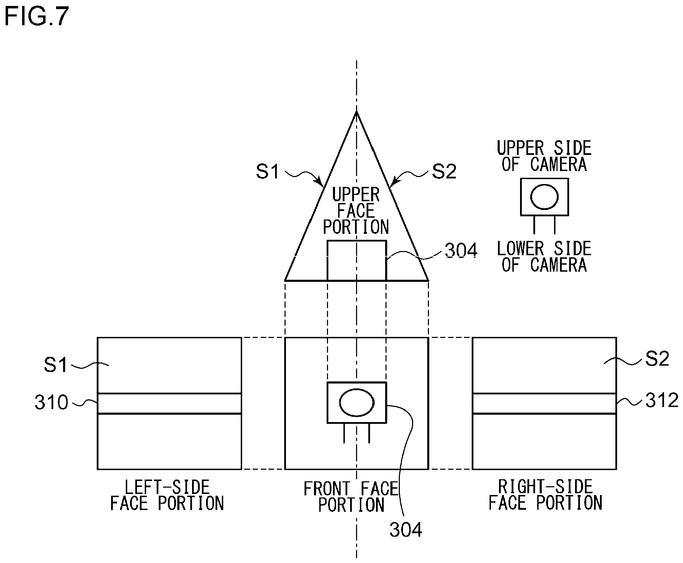

Figs. 6A and 6B are a front view and a perspective view of an image acquisition apparatus 300 according to a second embodiment. Fig. 7 is a projection view of the image acquisition apparatus 300. The image acquisition apparatus 300 includes a housing 302 and a camera unit 304 built into the housing 302. The housing 302 is configured to have a first side face S1 and a second side face S2. The housing 302 is structured to provide the same external appearance when the first side face S1 is mounted on the right-side face of the vehicle as that when the second side face S2 is mounted on the left-side face of the vehicle. That is to say, the housing 302 is configured to have horizontal symmetry with respect to the sagittal plane (indicated by the line of dashes and dots in Fig. 7).

For ease of understanding, in the drawings, the housing 302 has a structure of a triangular prism with a bottom face configured as an isosceles triangle. Also, the housing 302 may have a more complicated structure.

The first-side face S1 and the second-side face S2 are provided with structures 310 and 312 to be mounted on the vehicle body. The structures 310 and 312 have the same shape. The structures 310 and 312 may each be configured as a rail, groove, recess portion, or hook.

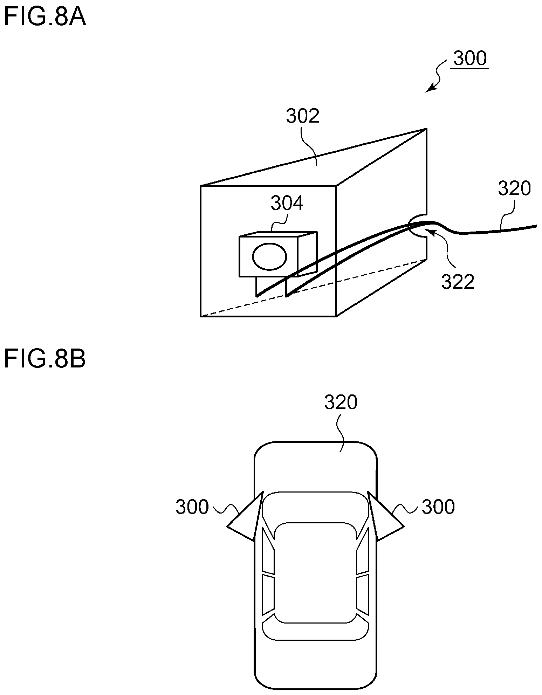

Figs. 8A and 8B are diagrams for explaining an example of wiring of the image acquisition apparatus 300 and the mounting thereof on the vehicle main body. As shown in Fig. 8A, wiring 320 may preferably be drawn from an opening 322 provided to a front end portion of the housing 302 of the image acquisition apparatus 300. With this, the wiring 320 has no effect on the external appearance symmetry. It should be noted that the wiring 320 is shown as two lines. In actuality, the wiring 320 includes power supply lines, image transmission lines, etc. That is to say, the number of the lines that forms the wiring 320 is not restricted in particular.

As shown in Fig. 8B, when the image acquisition apparatus 300 is mounted on a vehicle body 320, it is preferable for the front end portion of the housing 302 to be embedded in the vehicle body 320.

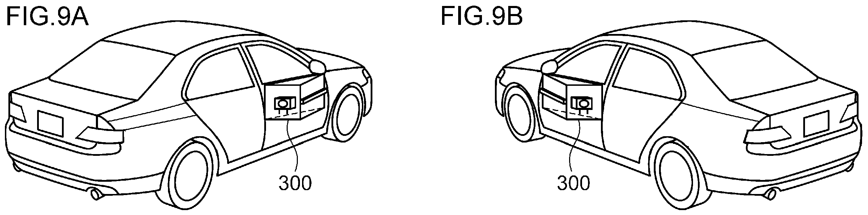

Figs. 9A and 9B are perspective views each showing a vehicle after the image acquisition apparatus 300 shown in Fig. 6 is mounted. Fig. 9A shows the right-side face of the vehicle, and Fig. 9B shows the left-side face of the vehicle.

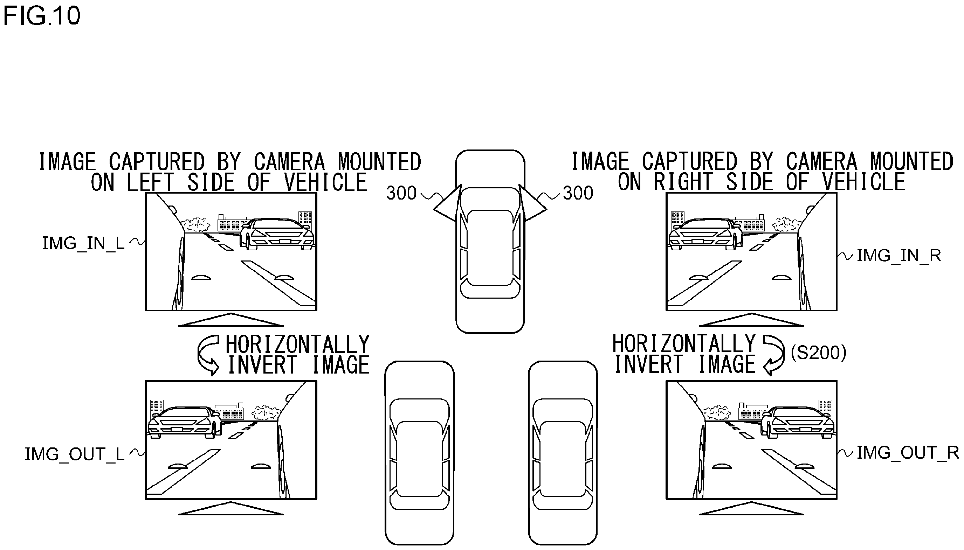

Fig. 10 is a diagram for explaining image processing by the electronic mirror system 100 including the image acquisition apparatus 300 shown in Fig. 6. Here, "IMG_IN_R" and "IMG_IN_L" represent output images of the right-side camera and the left-side camera, respectively. The image processing unit 104 horizontally inverts the output images of the right-side camera and the left-side camera (S200). Here, the "horizontal direction" represents the horizontal direction of the image data.

As described above, with the second embodiment, the camera unit 304 is arranged such that it directly faces an actual image (subject). This allows the same image processing to be used for the output images of the left-side camera and the right-side camera. The first embodiment allows the image acquisition apparatuses 200 to each be configured as a common component. However, there is a difference in the image processing between the left-side camera and the right-side camera. In addition to such an advantage of allowing the image acquisition apparatuses 300 to each be configured as a common component, the second embodiment has an advantage of allowing the same image processing to be used.

With the second embodiment, the housing 302 is provided with a light source as a built-in component, so as to provide both a camera function and a side marker function. In this case, the light source is arranged such that it does not interfere with the structure 310 such as a rail or the like.

Description has been made regarding the present invention with reference to the embodiments using specific terms. However, the above-described embodiments show only the mechanisms and applications of the present invention for exemplary purposes only, and are by no means intended to be interpreted restrictively.

### [DESCRIPTION OF THE REFERENCE NUMERALS]

100 electronic mirror system, 102L left-side camera, 102R right-side camera, 104 image processing unit, 106 display, 2 vehicle, 200 image acquisition apparatus, 202 housing, 204 camera unit, 206 light source, 300 image acquisition apparatus, 302 housing, 304 camera unit, S1 first side face, S2 second side face.

### [INDUSTRIAL APPLICABILITY]

The present invention relates to an electronic mirror.

## Claims

1. An image acquisition apparatus (200) comprising:
a housing (202) ;
a camera unit (204) mounted within the housing (202) with an orientation so as to provide an output image obtained by rotating an actual image by 90 degrees;
**characterized in that** the housing (202) has an external appearance that is up-down symmetrical about a central line of the housing (202) which is parallel to the horizontal direction (v) of the earth, when the image acquisition apparatus (200) is mounted on a left-side or a right-side of a vehicle body (2), and **in that** the image acquisition apparatus (200)_mounted on the left-side of the vehicle body (2) and the image acquisition apparatus (200) mounted on the right-side of the vehicle body (2) are configured as a common component.

2. The image acquisition apparatus (200) according to claim 1, further comprising a light source (206) built into the housing (202), so as to provide a function as a side marker.

3. An electronic mirror system (100) comprising:
a right-side camera (102R) and a left-side camera (102L) respectively provided to a right-side face and a left-side face of a vehicle (2);
a processing unit (104) structured to process output images of the left-side camera (102L) and the right-side camera (102R); and
a display (106) structured to output an image processed by the processing unit (104),
wherein the right-side camera (102R) and the left-side camera (102L) are each structured as the image acquisition apparatus (200) according to claim 1 or 2, which are structured as a common component.

4. The electronic mirror system (100) according to claim 3, wherein the processing unit (104) horizontally inverts the respective output images of the right-side camera (102R) and the left-side camera (102L), and rotates the output images thereof by 90 degrees in opposite rotational directions.

5. An image acquisition apparatus (300) comprising:
a housing (302); and
a camera unit (304) built into the housing (302),
wherein the housing (302) is structured to have a first side face (S1) and a second side face (S2), and to provide the same external appearance when the first side face (S1) is mounted on a right-side face of a vehicle body (2) and when the second side face (S2) is mounted on a left-side face of the vehicle body (2);
**characterized in that** the image acquisition apparatus (300)_mounted on the left-side of the vehicle body (2) and the image acquisition apparatus (300) mounted on the right-side of the vehicle body (2) are configured as a common component.

6. An electronic mirror system (100) comprising:
a right-side camera (102R) and a left-side camera (102L) respectively provided to a right-side face and a left-side face of a vehicle (2);
a processing unit (104) structured to process output images of the left-side camera (102L) and the right-side camera (102R); and
a display (106) structured to output an image processed by the processing unit (104),
wherein the right-side camera (102R) and the left-side camera (102L) are each structured as the image acquisition apparatus (300) according to claim 5, which are structured as a common component.

7. The electronic mirror system (100) according to claim 6, wherein the processing unit (104) horizontally inverts the respective output images of the right-side camera (102R) and the left-side camera (102L).

8. A vehicle (2) comprising the electronic mirror system according to any one of claims 3, 4, 6, and 7.

## Patentansprüche

1. Bilderfassungsvorrichtung (200), die Folgendes umfasst:
ein Gehäuse (202);
eine Kameraeinheit (204), die in dem Gehäuse (202) so ausgerichtet ist, dass sie ein Ausgangsbild liefert, das durch Drehen eines tatsächlichen Bildes um 90 Grad erhalten wird;
**dadurch gekennzeichnet, dass** das Gehäuse (202) ein äußeres Erscheinungsbild aufweist, das um eine Mittellinie des Gehäuses (202), die parallel zur Horizontalrichtung (v) der Erde verläuft, von oben nach unten symmetrisch ist, wenn die Bilderfassungsvorrichtung (200) an einer linken Seite oder einer rechten Seite einer Fahrzeugkarosserie (2) angebracht ist, und dass die an der linken Seite der Fahrzeugkarosserie (2) angebrachte Bilderfassungsvorrichtung (200) und die an der rechten Seite der Fahrzeugkarosserie (2) angebrachte Bilderfassungsvorrichtung (200) als eine gemeinsame Komponente ausgebildet sind.

2. Bilderfassungsvorrichtung (200) gemäß Anspruch 1, die ferner eine Lichtquelle (206) umfasst, die in das Gehäuse (202) eingebaut ist, um eine Funktion als Seitenmarkierung bereitzustellen.

3. Elektronisches Spiegelsystem (100), das Folgendes umfasst:
eine rechtsseitige Kamera (102R) und eine linksseitige Kamera (102L), die jeweils an einer rechtsseitigen Fläche und einer linksseitigen Fläche eines Fahrzeugs (2) vorgesehen sind;
eine Verarbeitungseinheit (104), die so aufgebaut ist, dass sie Ausgangsbilder der linksseitigen Kamera (102L) und der rechtsseitigen Kamera (102R) verarbeitet; und
ein Display (106), das so aufgebaut ist, dass es ein von der Verarbeitungseinheit (104) verarbeitetes Bild ausgibt,
wobei die rechtsseitige Kamera (102R) und die linksseitige Kamera (102L) jeweils als die Bilderfassungsvorrichtung (200) gemäß Anspruch 1 oder 2 ausgebildet sind, die als eine gemeinsame Komponente ausgebildet sind.

4. Elektronisches Spiegelsystem (100) gemäß Anspruch 3, wobei die Verarbeitungseinheit (104) die jeweiligen Ausgangsbilder der rechtsseitigen Kamera (102R) und der linksseitigen Kamera (102L) horizontal invertiert und deren Ausgangsbilder um 90 Grad in entgegengesetzten Drehrichtungen dreht.

5. Bilderfassungsvorrichtung (300), die Folgendes umfasst:
ein Gehäuse (302); und
eine Kameraeinheit (304), die in das Gehäuse (302) eingebaut ist,
wobei das Gehäuse (302) so strukturiert ist, dass es eine erste Seitenfläche (S1) und eine zweite Seitenfläche (S2) aufweist, und dass es das gleiche äußere Erscheinungsbild bereitstellt, wenn die erste Seitenfläche (S1) an einer rechtsseitigen Fläche einer Fahrzeugkarosserie (2) angebracht ist und wenn die zweite Seitenfläche (S2) an einer linksseitigen Fläche der Fahrzeugkarosserie (2) angebracht ist;
**dadurch gekennzeichnet, dass** die auf der linken Seite der Fahrzeugkarosserie (2) angebrachte Bilderfassungsvorrichtung (300) und die auf der rechten Seite der Fahrzeugkarosserie (2) angebrachte Bilderfassungsvorrichtung (300) als eine gemeinsame Komponente ausgebildet sind.

6. Elektronisches Spiegelsystem (100), das Folgendes umfasst:
eine rechtsseitige Kamera (102R) und eine linksseitige Kamera (102L), die jeweils an einer rechtsseitigen Fläche und einer linksseitigen Fläche eines Fahrzeugs (2) vorgesehen sind;
eine Verarbeitungseinheit (104), die so aufgebaut ist, dass sie Ausgangsbilder der linksseitigen Kamera (102L) und der rechtsseitigen Kamera (102R) verarbeitet; und
ein Display (106), das so aufgebaut ist, dass es ein von der Verarbeitungseinheit (104) verarbeitetes Bild ausgibt,
wobei die rechtsseitige Kamera (102R) und die linksseitige Kamera (102L) jeweils als die Bilderfassungsvorrichtung (300) gemäß Anspruch 5 ausgebildet sind, die als eine gemeinsame Komponente ausgebildet sind.

7. Elektronisches Spiegelsystem (100) gemäß Anspruch 6, wobei die Verarbeitungseinheit (104) die jeweiligen Ausgangsbilder der rechtsseitigen Kamera (102R) und der linksseitigen Kamera (102L) horizontal invertiert.

8. Fahrzeug (2), das ein elektronisches Spiegelsystem gemäß einem der Ansprüche 3, 4, 6 und 7 umfasst.

## Revendications

1. Appareil d'acquisition d'images (200) comprenant :
un boîtier (202) ;
une unité de caméra (204) montée à l'intérieur du boîtier (202) selon une orientation de manière à fournir une image de sortie obtenue en faisant tourner une image réelle de 90 degrés ;
**caractérisé en ce que** le boîtier (202) a un aspect extérieur qui est symétrique de haut en bas autour d'une ligne centrale du boîtier (202) qui est parallèle à la direction horizontale (v) de la terre, lorsque l'appareil d'acquisition d'images (200) est monté sur un côté gauche ou un côté droit d'une carrosserie de véhicule (2), et **en ce que** l'appareil d'acquisition d'images (200) monté sur le côté gauche de la carrosserie de véhicule (2) et l'appareil d'acquisition d'images (200) monté sur le côté droit de la carrosserie de véhicule (2) sont configurés en tant que composant commun.

2. Appareil d'acquisition d'images (200) selon la revendication 1, comprenant en outre une source de lumière (206) intégrée dans le boîtier (202), de manière à assurer une fonction de repère latéral.

3. Système de rétroviseur électronique (100) comprenant :
une caméra côté droit (102R) et une caméra côté gauche (102L) prévues respectivement sur une face côté droit et une face côté gauche d'un véhicule (2) ;
une unité de traitement (104) structurée pour traiter les images de sortie de la caméra côté gauche (102L) et de la caméra côté droit (102R) ; et
un dispositif d'affichage (106) structuré pour délivrer en sortie une image traitée par l'unité de traitement (104),
dans lequel la caméra côté droit (102R) et la caméra côté gauche (102L) sont chacune structurées comme étant l'appareil d'acquisition d'images (200) selon la revendication 1 ou 2, qui est structuré en tant que composant commun.

4. Système de rétroviseur électronique (100) selon la revendication 3, dans lequel l'unité de traitement (104) inverse horizontalement les images de sortie respectives de la caméra côté droit (102R) et de la caméra côté gauche (102L), et fait tourner les images de sortie de celles-ci de 90 degrés dans des directions de rotation opposées.

5. Appareil d'acquisition d'images (300) comprenant :
un boîtier (302) ; et
une unité de caméra (304) intégrée dans le boîtier (302),
dans lequel le boîtier (302) est structuré pour avoir une première face latérale (S1) et une deuxième face latérale (S2), et pour fournir le même aspect extérieur lorsque la première face latérale (S1) est montée sur une face côté droit d'une carrosserie de véhicule (2) et lorsque la deuxième face latérale (S2) est montée sur une face côté gauche de la carrosserie de véhicule (2) ;
**caractérisé en ce que** l'appareil d'acquisition d'images (300) monté sur le côté gauche de la carrosserie de véhicule (2) et l'appareil d'acquisition d'images (300) monté sur le côté droit de la carrosserie de véhicule (2) sont configurés en tant que composant commun.

6. Système de rétroviseur électronique (100) comprenant :
une caméra côté droit (102R) et une caméra côté gauche (102L) prévues respectivement sur une face côté droit et une face côté gauche d'un véhicule (2) ;
une unité de traitement (104) structurée pour traiter les images de sortie de la caméra côté gauche (102L) et de la caméra côté droit (102R) ; et
un dispositif d'affichage (106) structuré pour délivrer en sortie une image traitée par l'unité de traitement (104),
dans lequel la caméra côté droit (102R) et la caméra côté gauche (102L) sont chacune structurées comme étant l'appareil d'acquisition d'images (300) selon la revendication 5, qui est structuré en tant que composant commun.

7. Système de rétroviseur électronique (100) selon la revendication 6, dans lequel l'unité de traitement (104) inverse horizontalement les images de sortie respectives de la caméra côté droit (102R) et de la caméra côté gauche (102L).

8. Véhicule (2) comprenant le système de rétroviseur électronique selon l'une quelconque des revendications 3, 4, 6 et 7.
